# EUROPÄISCHE PATENTANMELDUNG

(11) **EP 2 090 844 A2**
(43) Veröffentlichungstag der Anmeldung: **19.08.2009**
(21) Anmeldenummer: 09001866.4
(22) Anmeldetag: 11.02.2009
(51) Int. Cl.: F24H 1/18, F24H 7/04, F28D 20/00

(54) **Warmwasserspeicher**

(30) Priorität: 16.02.2008 DE 102008009551
(71) Anmelder: Robert Bosch GmbH, 70442 Stuttgart (DE)
(72) Erfinder: Kröll, Ulrich, 72654 Neckartenzlingen (DE)

(57) **Zusammenfassung**

Die Erfindung betrifft einen Warmwasserspeicher, insbesondere Pufferspeicher für ein Heizungssystem zur solaren Heizungsunterstützung, mit einem Speicherbehälter (1) mit einer Wärmedämmung aus einem Schaumstoff, welche wahlweise direkt den äußeren Mantel bildet oder außen von einem dünnwandigen Mantelteil umgeben ist.

Es ist Aufgabe der Erfindung, einen insbesondere für die solare Heizungsunterstützung geeigneten Warmwasserspeicher mit einem einfachen und kompakten Aufbau zu schaffen.

Gekennzeichnet ist der Warmwasserspeicher dadurch, dass der Speicherbehälter (1) aus mindestens zwei horizontal übereinander geschichteten Formteilen (2, 2', 2") der Wärmedämmung aus Schaumstoff mit einem zugeordneten Deckel (3, 3') gebildet wird, und dass nach der Montage der Formteile (2, 2', 2") in diese eine flüssigkeitsdichte, sackartige Folie (4) eingehängt und mit einer stagnierenden Flüssigkeit befüllt wird.

## Beschreibung

Die Erfindung betrifft einen Warmwasserspeicher, insbesondere einen Pufferspeicher für ein Heizungssystem zur solaren Heizungsunterstützung, nach dem Oberbegriff des Patentanspruches 1.

Gattungsgemäße Warmwasserspeicher kommen insbesondere bei Heizungs- und/oder Warmwasserbereitungssystemen als sogenannte Pufferspeicher zum Einsatz, wenn eine Solaranlage zusätzlich zu einem Heizgerät mit einer Brennereinheit vorhanden ist. Derartige bivalente Heizungs- und Warmwasserbereitungsanlagen sind allgemein bekannt. Damit sollen verstärkt regenerative Energien genutzt und fossile Brennstoffe eingespart werden. Beispielsweise gibt es solar beheizte Pufferspeicher, welche hydraulisch und regeltechnisch an ein zugeordnetes Heizgerät angeschlossen bzw. darauf abgestimmt sind und zur Vorwärmung des Heizwassers dienen. Dies erfordert allerdings meistens einen erheblichen anlagentechnischen Aufwand und durch die relativ großen Wassermengen besteht auch ein relativ großer Platzbedarf.

Für die solare Warmwasserbereitung sind entweder separate oder in die Pufferspeicher integrierte Warmwasserspeicher bekannt. Im zweiten Fall befinden sich die Speicherbehälter für das geringer bemessene Warmwasservolumen im oberen Bereich des Speicherbehälters für das Heizwasser und sind vollständig vom Heizwasser umgeben. Weil es sich dabei um Schweißkonstruktionen handelt, wird immer ein symmetrischer Gesamtaufbau angestrebt, um Spannungen möglichst gering zu halten.

Die üblichen Konstruktionen, nämlich ein Speicherbehälter aus Stahlblech mit Anschlüssen zur Entnahme und Einspeisung von Wasser, sind hinreichend bekannt. Dabei ist der Speicherbehälter mit einer umgebenden Wärmedämmung aus einem Schaumstoff versehen, welche wahlweise direkt den äußeren Mantel bildet oder von einem dünnwandigen Mantelteil, zum Beispiel einem Blech, umgeben ist. Auch gibt es schon Lösungen, bei denen der Wärmeschutzmantel vertikal in zwei Halbschalen geteilt ist, und dann erst bei der Montage am Aufstellort mit Spannbändern um den Speicherbehälter gepackt wird.

Bisher werden die Speicherbehälter üblicherweise als Druckbehälter ausgebildet, weil einerseits bei Warmwasserspeichern der Wassernetzdruck und andererseits bei Pufferspeichern der Systemdruck aus dem Heiznetz ansteht.

Problematisch bei Pufferspeichern für Systeme zur solaren Warmwasserbereitung und Heizungsunterstützung sind oftmals auch das Gewicht der Speicher sowie die äußeren Abmessungen. Handhabung und Einbringung werden dadurch erschwert bzw. sogar manchmal wegen baulicher Gegebenheiten am Installationsort auch unmöglich.

Der Erfindung liegt die Aufgabe zugrunde, einen insbesondere für die solare Heizungsunterstützung geeigneten Warmwasserspeicher mit einem einfachen und kompakten Aufbau zu schaffen.

Erfindungsgemäß wird dies mit den Merkmalen des Patentanspruches 1 gelöst. Vorteilhafte Weiterbildungen sind den Unteransprüchen zu entnehmen.

Der Warmwasserspeicher ist **dadurch gekennzeichnet, dass** der Speicherbehälter aus mindestens zwei horizontal übereinander geschichteten Formteilen der Wärmedämmung aus Schaumstoff mit einem zugeordneten Deckel gebildet wird. Nach der Montage der Formteile wird in diese eine flüssigkeitsdichte, sackartige Folie eingehängt und mit einer stagnierenden Flüssigkeit befüllt, so dass ein druckloser Speicher entsteht.

Eine Nut- und Feder-Verbindung im Bereich der Teilung ist zwischen den Formteilen vorgesehen. Dadurch entstehen aus gleichartigen, gut transportierbaren Formteilen über Modulbauweise beliebige Speichergrößen. Die einzelnen Formteile bestehen vorwiegend aus Wärmedämmmaterial, insbesondere Schaumstoff, in das aus Festigkeitsgründen zusätzliche, beispielsweise ringartige Elemente aus Metall, Kunststoff, Holz, und/oder Gewebe als Verstärkungsmaterial eingeformt sind.

An der Innenseite einzelner Formteile kann ein Wärmeübertrager angebracht oder eingeformt sein, welcher eine großflächige Oberfläche auf der der Folie zugewandten Seite besitzt und wahlweise auch zur Verstärkung des Formteiles dient. Für den Einsatz als solar beheizter Pufferspeicher steht dann der Wärmeübertrager mit einem Solarkreislauf in Verbindung. Vorzugsweise wird die in die Formteile eingehängte sackartige Folie an der Oberseite des mit dem Deckel zu verschließenden Formteiles bis in den Bereich der Teilung zwischen den Formteilen gezogen und wahlweise dort zusätzlich an einem Formteil fixiert. Ansonsten wird die Folie bei aufgesetztem Deckel ausreichend angepresst.

In einer weiteren Ausführungsform enthält der Deckel der Wärmedämmung aus Schaumstoff einen druckbeaufschlagten Warmwasserspeicher. Dieser ragt mit seiner nicht wärmegedämmten Unterseite des Speicherbehälters in den darunter angeordneten, mit einer stagnierenden Flüssigkeit befüllten drucklosen Speicherbehälter und verschließt diesen. Dabei bildet die eingetauchte Oberfläche des Speicherbehälters die Wärmeübertragungsfläche. Die stagnierende Flüssigkeit im drucklosen Speicherbehälter sollte eine große Wärmekapazität besitzen, so dass sich beispielsweise Wasser, welches gegebenenfalls auch mit Korrosionsschutzmittel versehen werden kann, besonders gut dafür eignet.

Vorzugsweise besitzt der Innenquerschnitt des mit einer stagnierenden Flüssigkeit befüllten Speicherbehälters eine im Wesentlichen rechteckige Form, um verhältnismäßig viel Füllinhalt auf einer geringen Standfläche zu ermöglichen. Im Deckel ist eine Druckausgleichsöffnung vorgesehen. Der mit einer stagnierenden Flüssigkeit befüllte drucklose Speicherbehälter besitzt eine schwimmende Deckschicht aus festem oder flüssigem Material zum Verhindern von Verdunstung und Geruchsausgleich.

Vorteilhaft am erfindungsgemäßen Aufbau ist, dass der druckbeaufschlagte Warmwasserspeicher an einer beliebigen Stelle in den unteren Speicherbehälter eintauchen kann. Damit wird eine Platz sparende Bauweise der Gesamtanordnung ermöglicht, weil Komponenten kompakt im oberen Bereich der Wärmedämmung, innerhalb oder außerhalb davon, angeordnet werden können. Wahlweise kann der druckbeaufschlagte Warmwasserspeicher mit einer innen liegenden Heizschlange ausgestattet oder auch als Schichtladespeicher mit externem Wärmeübertrager gestaltet sein.

Generell kann somit die Wärmedämmung des druckbeaufschlagten Warmwasserspeichers als Montagehilfe und/oder zur Fixierung für weitere Systemkomponenten und Bauteile dienen und/oder fasst diese ein. Dazu gehören zum Beispiel Ausdehnungsgefäß und Solarstation, welche bei herkömmlichem Aufbau separat und außerhalb angeordnet wären. Weiterhin kann ein dem Heizungssystem zugeordnetes Heizgerät direkt an der Anordnung befestigt werden, wobei zur wärmetechnischen Entkoppelung die Befestigungsvorrichtung ohne Kontakt mit dem Speicherbehälter eingeschäumt ist. Auch ist es einfach möglich, Temperatursensoren in die Formteile einzuschäumen. Diese können wahlweise jeweils in einer Wärme leitenden Kapsel eingefasst sein.

Am mit einer stagnierenden Flüssigkeit befüllten drucklosen Speicherbehälter ist nur eine Leitung durch die Wand eines Formteiles im oberen Bereich nach außen geführt. Diese dient als Füllhilfe und Füllstandsanzeige. Weiterhin kann eine aus dem drucklosen Speicherbehälter ansaugende Ladepumpe, welche für die Zufuhr von Wärme aus der stagnierenden Flüssigkeit zu einem Wärmetauscher und/oder Heizgerät vorgesehen ist, so innerhalb oder in der Nähe des oberen Bereiches des Speicherbehälters angeordnet sein, dass diese selbstansaugend ist. Das Pumpenlaufrad muss dabei unter dem Flüssigkeitsspiegel im Speicherbehälter liegen, so dass durch den Siphon-Effekt Wasser zuströmt. Die Anordnung der Pumpe kann beispielsweise im Deckel erfolgen, vorteilhafterweise dort unterhalb einer Montageposition für ein Heizgerät.

Mit der erfindungsgemäßen Gestaltung wird ein insbesondere für die solare Heizungsunterstützung geeigneter Warmwasserspeicher optimiert. Einerseits entsteht ein kostengünstiger, fertigungsgerechter Aufbau und andererseits ergibt sich eine kompakte, optisch ansprechende Einheit, welche trotzdem ein großes Speichervolumen bietet. Es steht durch die Modulbauweise mit Formteilen ein flexibel vom Fassungsvermögen zu gestaltender Pufferspeicher für Systeme zur solaren Warmwasserbereitung und Heizungsunterstützung zur Verfügung. Es wäre sogar denkbar, dass bei bestehenden Heizungsanlagen ganz einfach das Pufferspeichervolumen nachträglich erhöht wird, wenn zum Beispiel eine weitere oder größere Energiequelle oder ein Wärmeerzeuger hinzu gekommen ist. In diesem Fall müsste lediglich ein weiteres Formteil aufgesetzt und eine neue, größere, sackartige Folie eingezogen werden. Insgesamt ist das Gewicht der Einzelteile sehr gering, so dass ein Installateur alleine und ohne Hilfsmittel in der Lage ist, den Speicher aufzustellen und einzubringen. Durch die geringen äußeren Abmessungen gibt es keinerlei Einschränkungen mehr am Aufstellort wegen baulicher Gegebenheiten.

Die Zeichnung stellt ein Ausführungsbeispiel der Erfindung dar. Es zeigt einen Warmwasserspeicher, insbesondere Pufferspeicher für ein Heizungssystem zur solaren Heizungsunterstützung:

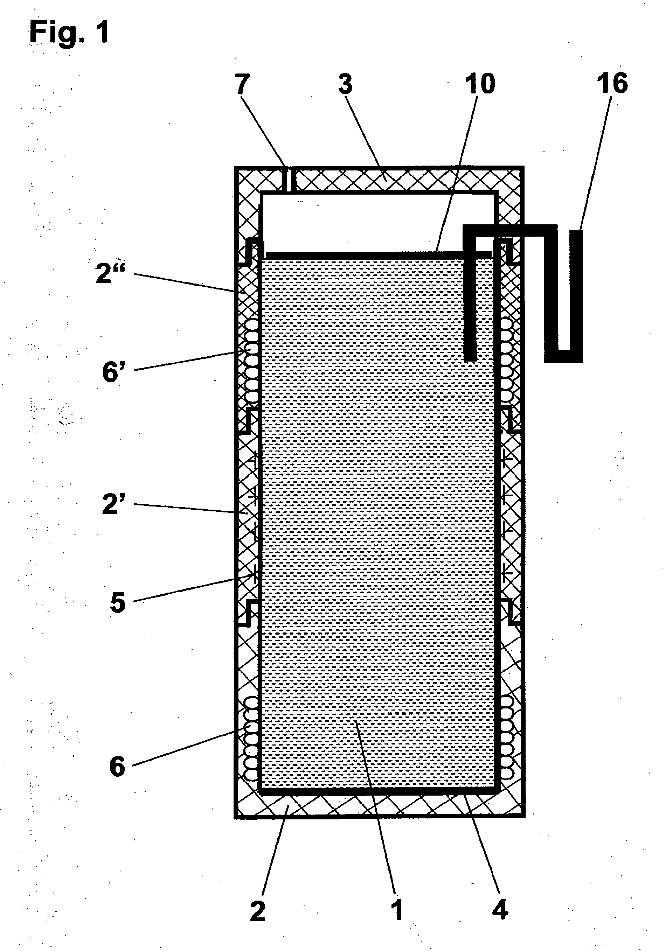

- Fig. 1:: nur mit einem Heizwasservolumen und zwei Wärmeübertragern im vertikalen Schnitt,
- Fig. 2:: mit einem im Deckel eingeschäumten Warmwasserspeicher im vertikalen Schnitt,
- Fig. 3:: mit einem im Deckel eingeschäumten Warmwasserspeicher im horizontalen Schnitt durch den unteren Bereich und
- Fig. 4:: mit einem im Deckel eingeschäumten Warmwasserspeicher sowie weiteren Komponenten im horizontalen Schnitt durch den oberen Bereich.

Der Warmwasserspeicher besitzt einen mit einer stagnierenden Flüssigkeit befüllbaren Speicherbehälter 1 aus mindestens zwei horizontal übereinander geschichteten Formteilen 2, 2', 2" der Wärmedämmung aus Schaumstoff mit einem zugeordneten Deckel 3, 3', in den nach der Montage der Formteile 2, 2', 2" eine flüssigkeitsdichte, sackartige Folie 4 eingehängt wird. Diese ist an der Oberseite des mit dem Deckel 3, 3' zu verschließenden Formteiles 2" bis in den Bereich der Teilung gezogen.

Im Bereich der Teilung zwischen den Formteilen 2, 2', 2" ist eine Nut- und Feder-Verbindung vorgesehen. In das Wärmedämmmaterial, insbesondere Schaumstoff, der einzelnen Formteile 2, 2', 2" sind aus Festigkeitsgründen zusätzliche Elemente 5 aus Metall, Kunststoff, Holz, und/oder Gewebe als Verstärkungsmaterial eingeformt. An der Innenseite einzelner Formteile 2, 2" ist jeweils ein Wärmeübertrager 6, 6' angebracht oder eingeformt. Weiterhin ist im Deckel 3 eine Druckausgleichsöffnung 7 vorgesehen.

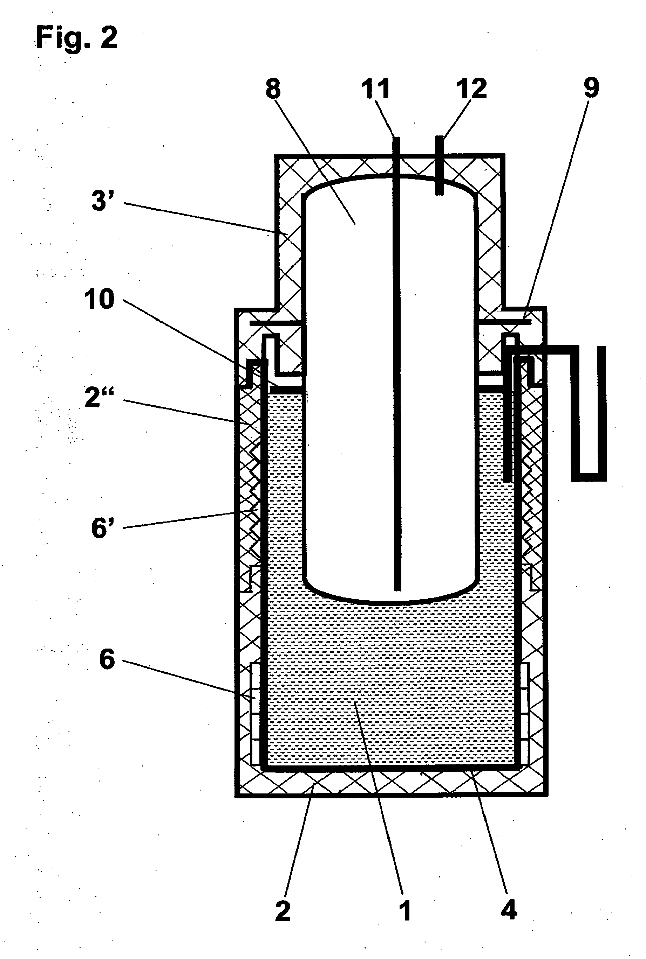

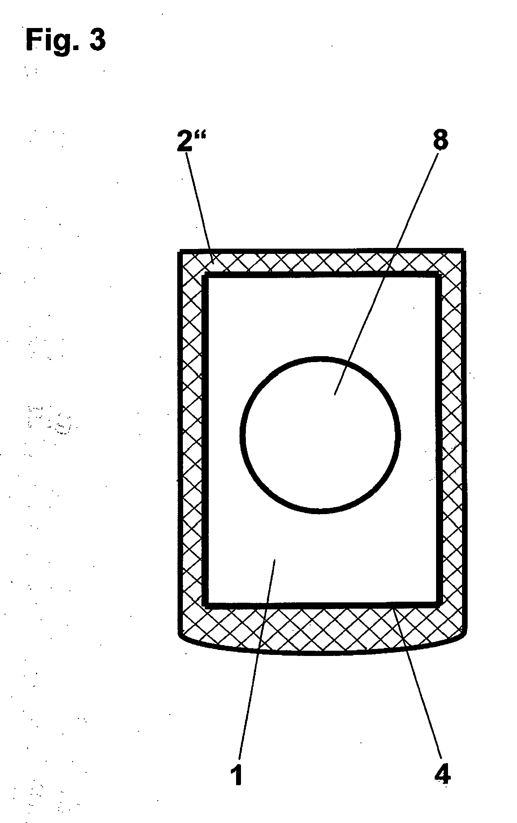

Gemäß den Fig. 2, 3 und 4 enthält der Deckel 3' einen druckbeaufschlagten Warmwasserspeicher, welcher mit seiner nicht wärmegedämmten Unterseite des Speicherbehälters 8 in die Flüssigkeit im darunter angeordneten, drucklosen Speicherbehälter 1 ragt und diesen verschließt. Der Speicherbehälter 8 weist einen umlaufenden Ring 9 zur Lastabtragung in der umgebenden Wärmedämmung auf.

Auf der stagnierenden Flüssigkeit im drucklosen Speicherbehälter 1 befindet sich eine schwimmende Deckschicht 10 aus festem oder flüssigem Material zum Verhindern von Verdunstung und Geruchsausgleich besitzt.

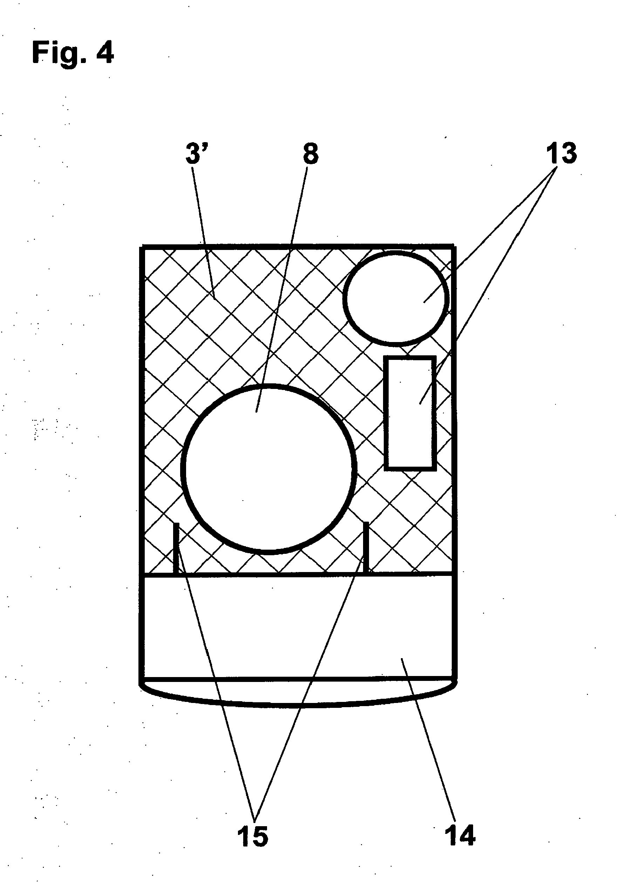

Der druckbeaufschlagte Warmwasserspeicher ist als Schichtladespeicher ausgeführt und besitzt eine Kaltwasserzufuhrleitung 11 und eine Warmwasserabfuhrleitung 12. Gemäß Fig. 4 dient dessen Wärmedämmung bzw. die des Deckels 3' als Montagehilfe und/oder zum Fixieren weiterer Systemkomponenten 13 und/oder fasst diese ein. Ein dem Heizungssystem zugeordnetes Heizgerät 14 ist direkt an der Anordnung über die eingeschäumten Befestigungsvorrichtungen 15 fixiert.

Außerdem ist als Füllhilfe und Füllstandsanzeige für den drucklosen Speicherbehälter 1 eine Leitung 16 durch die Wand des Deckels 3, 3' nach außen geführt.

## Patentansprüche

1. Warmwasserspeicher, insbesondere Pufferspeicher für ein Heizungssystem zur solaren Heizungsunterstützung, mit einem Speicherbehälter (1) mit mindestens einem Anschluss sowie einer Wärmedämmung aus einem Schaumstoff, welche wahlweise direkt den äußeren Mantel bildet oder außen von einem dünnwandigen Mantelteil umgeben ist, **dadurch gekennzeichnet, dass** der Speicherbehälter (1) aus mindestens zwei horizontal übereinander geschichteten Formteilen (2, 2', 2") der Wärmedämmung aus Schaumstoff mit einem zugeordneten Deckel (3, 3') gebildet wird, und dass nach der Montage der Formteile (2, 2', 2") in diese eine flüssigkeitsdichte, sackartige Folie (4) eingehängt und mit einer stagnierenden Flüssigkeit befüllt wird.

2. Warmwasserspeicher nach Anspruch 1,
**dadurch gekennzeichnet, dass** eine Nut- und Feder-Verbindung im Bereich der Teilung zwischen den Formteilen (2, 2', 2") vorgesehen ist.

3. Warmwasserspeicher nach den Ansprüchen 1 oder 2,
**dadurch gekennzeichnet, dass** die einzelnen Formteile (2, 2', 2") vorwiegend aus Wärmedämmmaterial, insbesondere Schaumstoff, bestehen, in das aus Festigkeitsgründen zusätzliche Elemente (5) aus Metall, Kunststoff, Holz, und/oder Gewebe als Verstärkungsmaterial eingeformt sind.

4. Warmwasserspeicher nach einem der Ansprüche 1 bis 3,
**dadurch gekennzeichnet, dass** an der Innenseite einzelner Formteile (2, 2") ein Wärmeübertrager (6, 6') angebracht oder eingeformt ist, welcher eine großflächige Oberfläche auf der der Folie (4) zugewandten Seite besitzt und wahlweise auch zur Verstärkung des Formteiles (2, 2") dient.

5. Warmwasserspeicher nach einem der Ansprüche 1 bis 4,
**dadurch gekennzeichnet, dass** die in die Formteile (2, 2', 2") eingehängte sackartige Folie (4) an der Oberseite des mit dem Deckel (3, 3') zu verschließenden Formteiles (2") bis in den Bereich der Teilung zwischen den Formteilen (2, 2', 2") gezogen und wahlweise dort zusätzlich an einem Formteil (2, 2', 2") fixiert ist.

6. Warmwasserspeicher nach einem der Ansprüche 1 bis 5,
**dadurch gekennzeichnet, dass** der Deckel (3, 3') der Wärmedämmung aus Schaumstoff einen druckbeaufschlagten Warmwasserspeicher enthält, welcher mit seiner nicht wärmegedämmten Unterseite des Speicherbehälters (8) in den darunter angeordneten, mit einer stagnierenden Flüssigkeit befüllten drucklosen Speicherbehälter (1) ragt und diesen verschließt, wobei die eingetauchte Oberfläche des Speicherbehälters (8) die Wärmeübertragungsfläche bildet.

7. Warmwasserspeicher nach einem der Ansprüche 1 bis 6,
**dadurch gekennzeichnet, dass** die stagnierende Flüssigkeit Wasser, Wasser mit Korrosionsschutz, oder auch ein Medium ist, das eine große Wärmekapazität besitzt.

8. Warmwasserspeicher nach einem der Ansprüche 1 bis 7,
**dadurch gekennzeichnet, dass** der Innenquerschnitt des mit einer stagnierenden Flüssigkeit befüllten Speicherbehälters (1) eine im Wesentlichen rechteckige Form hat.

9. Warmwasserspeicher nach einem der Ansprüche 1 bis 8,
**dadurch gekennzeichnet, dass** im Deckel (3, 3') eine Druckausgleichsöffnung (7) vorgesehen ist.

10. Warmwasserspeicher nach einem der Ansprüche 1 bis 9,
**dadurch gekennzeichnet, dass** der mit einer stagnierenden Flüssigkeit befüllte drucklose Speicherbehälter (1) eine schwimmende Deckschicht (10) aus festem oder flüssigem Material zum Verhindern von Verdunstung und Geruchsausgleich besitzt.

11. Warmwasserspeicher nach einem der Ansprüche 1 bis 10,
**dadurch gekennzeichnet, dass** der druckbeaufschlagte Warmwasserspeicher an einer beliebigen Stelle in den Speicherbehälter (1) eintaucht sowie mit einer innen liegenden Heizschlange ausgestattet oder auch als Schichtladespeicher mit externem Wärmeübertrager gestaltet ist.

12. Warmwasserspeicher nach einem der Ansprüche 1 bis 11,
**dadurch gekennzeichnet, dass** die Wärmedämmung des druckbeaufschlagten Warmwasserspeichers als Montagehilfe und/oder zur Fixierung für weitere Systemkomponenten (13) und Bauteile dient und/oder diese einfasst.

13. Warmwasserspeicher nach einem der Ansprüche 1 bis 12,
**dadurch gekennzeichnet, dass** ein dem Heizungssystem zugeordnetes Heizgerät (14) direkt an der Anordnung befestigt ist, wobei zur wärmetechnischen Entkoppelung die Befestigungsvorrichtung (15) ohne Kontakt mit dem Speicherbehälter (8) eingeschäumt ist.

14. Warmwasserspeicher nach einem der Ansprüche 1 bis 13,
**dadurch gekennzeichnet, dass** für den mit einer stagnierenden Flüssigkeit befüllten drucklosen Speicherbehälter (1) eine Leitung (16) als Füllhilfe und Füllstandsanzeige durch die Wand des Deckels (3, 3') oder eines Formteiles (2, 2', 2") im oberen Bereich nach außen geführt ist.

15. Warmwasserspeicher nach einem der Ansprüche 1 bis 14,
**dadurch gekennzeichnet, dass** Temperatursensoren in Formteile (2, 2', 2") eingeschäumt sind, wobei diese wahlweise jeweils in einer Wärme leitenden Kapsel eingefasst sind.

16. Warmwasserspeicher nach einem der Ansprüche 1 bis 15,
**dadurch gekennzeichnet, dass** eine aus dem drucklosen Speicherbehälter (1) ansaugende Ladepumpe, welche für die Zufuhr von Wärme aus der stagnierenden Flüssigkeit zu einem Wärmetauscher und/oder Heizgerät vorgesehen ist, so innerhalb oder in der Nähe des oberen Bereiches des Speicherbehälters (1) angeordnet ist, dass diese selbstansaugend ist.
